**Europäisches Patentamt**

**European Patent Office**

**Office européen des brevets**

(19)

(11) Veröffentlichungsnummer : **0 419 706 B1**

(12)

# EUROPÄISCHE PATENTSCHRIFT

(45) Veröffentlichungstag der Patentschrift :
25.01.95 Patentblatt 95/04

(51) Int. Cl.⁶ : **G05B 19/416**

(21) Anmeldenummer : **89117901.2**

(22) Anmeldetag : **27.09.89**

(54) **Verfahren zur numerischen Positions- oder Bahnsteuerung.**

(43) Veröffentlichungstag der Anmeldung :
**03.04.91 Patentblatt 91/14**

(45) Bekanntmachung des Hinweises auf die
Patenterteilung :
**25.01.95 Patentblatt 95/04**

(84) Benannte Vertragsstaaten :
**AT CH DE FR IT LI NL SE**

(56) Entgegenhaltungen :
**DE-A- 2 643 148
DE-A- 3 545 795
US-A- 4 864 205**

(73) Patentinhaber : **SIEMENS
AKTIENGESELLSCHAFT
Wittelsbacherplatz 2
D-80333 München (DE)**

(72) Erfinder : **Böhm, Manfred, Dipl.-Ing.
Haus-Nr 30
D-8551 Wannbach (DE)**

**Beschreibung**

Die Erfindung bezieht sich auf ein Verfahren gemäß dem Oberbegriff von Anspruch 1 bzw. 3.

Bei zahlreichen technischen Anwendungen von Antriebssystemen, wie sie z.B. bei Förderanlagen, Aufzügen, Werkzeugmaschinen, Industrierobotern, Walzwerksanlagen oder Fahrzeugsteuerungen verwendet werden, ist eine Erzeugung von Bewegungsabläufen entsprechend definierter Bahnen erforderlich. Bei numerisch gesteuerten Antriebssystemen wird eine Folge von Sollpositionen in einer oder mehreren Koordinaten in einem bestimmten Zeittakt vorgegeben. Die Aufgabe der Steuerung besteht dabei darin, für den Übergang zwischen zwei Sollpositionen ein bestimmtes Beschleunigungs- und Geschwindigkeitsprofil zu berechnen und dem Antriebssystem vorzugeben. Dabei sollen die zulässigen Verfahrgeschwindigkeiten und die verfügbare Antriebsleistung möglichst gut ausgenutzt werden, ohne jedoch die Kontur durch Begrenzungseffekte oder Überschwingen zu verzerren.

Da wegen des vorgegebenen Zeittaktes bei numerischen Steuerungen eine Änderung bzw. Vorgabe von Sollbeschleunigungs- bzw. Sollgeschwindigkeitswerten nur zu diskreten Zeitpunkten erfolgen kann, müssen Maßnahmen getroffen werden, um die Ungenauigkeiten im Bereich eines Taktintervalls zu vermeiden.

In der DE-A1-26 43 148 ist ein gattungsgemäßes Verfahren zur numerischen Steuerung eines Elements einer Werkzeugmaschine entlang einer vorgegebenen Bewegungsbahn beschrieben, bei dem in jedem Tastintervall die einzustellenden diskreten Beschleunigungswerte, die diskreten Geschwindigkeitswerte und die abzufahrenden Wegininkremente durch einen Rechner berechnet werden. Eine Reduzierlogik erzeugt dann einen beschleunigungs-, geschwindigkeits- und restwegabhängigen Bremsbefehl für ein ganzes Tastintervall, in das ein exakter Bremseinsatzpunkt fällt. Ein Bremsbefehl wird dann jeweils für wenigstens ein Tastintervall ausgesetzt, sofern die ideale Bremsparabel nicht überschritten wird.

Bei diesem Verfahren ist es jedoch nicht möglich, einen vorgegebenen Zielpunkt genau zu einem Tastintervall zu erreichen.

Der vorliegenden Erfindung liegt die Aufgabe zugrunde, numerische Positions- oder Bahnsteuerungen so auszugestalten, daß eine Vorgabe von Antriebswerten zu einem Tastzeitpunkt vorgenommen wird und ein gewünschter Zielpunkt jeweils zu einem Abtastzeitpunkt erreicht wird.

Gemäß der Erfindung wird diese Aufgabe bei einem Verfahren der eingangs genannten Art durch das Kennzeichen von Anspruch 1 gelöst.

Die zugrundeliegende Aufgabe läßt sich aber auch mit den Verfahrensschritten gemäß Anspruch 3 lösen.

Durch diese Lösung der Aufgabe ist es möglich, auch während beispielsweise einer Bremsphase einen neuen Zielpunkt vorzugeben, da die Beschleunigung für jedes Tastintervall jeweils neu berechnet wird und damit ein neuer Zielpunkt jeweils berücksichtigt werden kann.

Vorteilhafte Ausführungsarten der Erfindung sind Gegenstand der Unteransprüche.

Das Verfahren wird anhand der beigefügten Zeichnung näher erläutert. Dabei zeigen:

FIG 1 die Struktur einer rechnergeführten Steuerung bei einer numerisch gesteuerten Werkzeugmaschine,

FIG 2 ein Diagramm des Geschwindigkeitsverlaufs über dem Weg mit maximaler Beschleungiung,

FIG 3 ein Diagramm des Geschwindigkeitsverlaufs über dem Weg mit den Tastintervallen angepaßten Beschleunigungsverläufen,

FIG 4 ein Flußdiagramm und

FIG 5 ein Diagramm zur Bildung eines ruckbegrenzten Beschleunigungsvorganges.

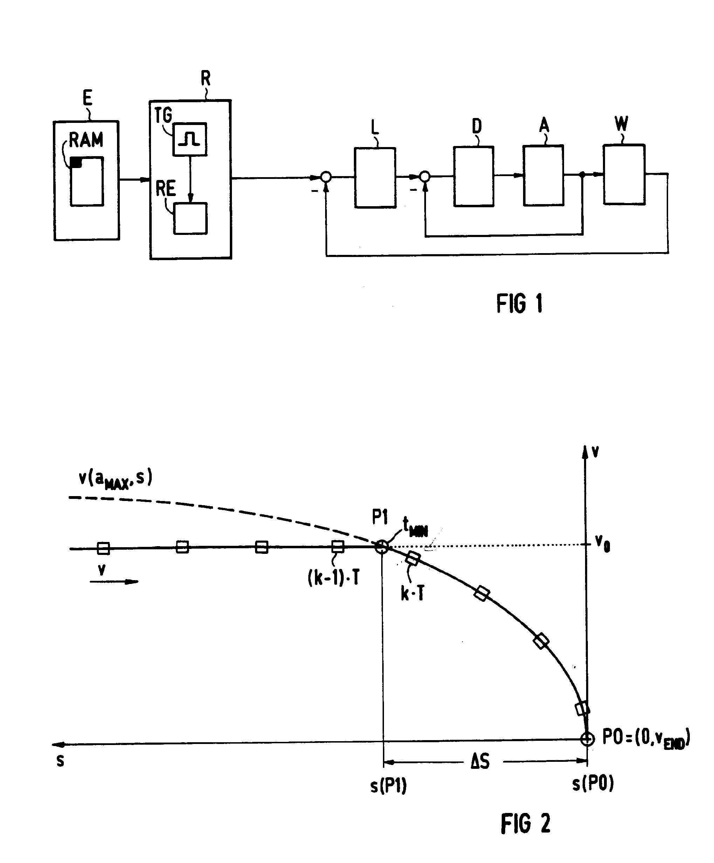

FIG 1 zeigt die Struktur einer rechnergeführten Steuerung einer numerisch gesteuerten Werkzeugmaschine W. Von einem Eingabegerät E werden die beispielsweise in einem Schreib-Lese-Speicher RAM abgespeicherten Informationen über den programmierten Bearbeitungsablauf in einen Rechner R eingegeben. Der Rechner R dekodiert die eingegebenen Informationen, nimmt Interpolationen vor, führt Berechnungen zur Ermittlung von Lagesollwerten für den Lageregelkreis L und Geschwindigkeitsberechnungen durch und übernimmt die Ablaufsteuerung. Der Rechner R enthält einen Taktgeber TG zur Erzeugung eines Taktrasters. Eine vorgegebene Anzahl von Takten des Taktgebers TG bildet eine Rechenzykluszeit oder Abtastzeit T. Während einer Abtastzeit T müssen jeweils erneut Lagesollwerte für jeden Lageregelkreis gebildet werden. Der Rechner R gibt Lagesollwerte an die Lageregelkreise L. Jeder Lageregelkreis L vergleicht die Lagesollwerte mit den Lageistwerten der Werkzeugmaschine W und steuert einen Drehzahlregelkreis D für das bzw. die Antriebssysteme A der betreffenden Maschinenachse. Eine Recheneinrichtung RE des Rechners R liefert zu jeder Abtastzeit ein beschleunigungs- und geschwindigkeitsproportionales Weginkrement, das durch eine geeignete Interpolation auf die einzelnen gesteuerten Maschinenachsen übertragen wird.

FIG 2 zeigt ein Geschwindigkeits-Wegdiagramm für einen Bremsvorgang eines Antriebssystems. Das Antriebssystem könnte beispielsweise die Leitspindel und über diese einen Schlitten der Werkzeugmaschine W antreiben. Wie der Geschwindigkeitspfeil mit der Geschwindigkeit v zeigt, bewegt sich der Schlitten in Richtung abnehmender Werte von S. Zunächst wird der Schlitten mit der konstanten Geschwindigkeit $v_O$ verfahren. Am Punkt PO, also im Schnittpunkt des Koordinatensystems, soll der Schlitten die Beschleunigung O und die Endgeschwindigkeit $v_{END}$ aufweisen. Dazu muß die konstante Verfahrgeschwindigkeit $v_O$ so abgebremst werden, daß der Zielpunkt s(PO) mit der Endgeschwindigkeit $v_{END}$ erreicht wird. Bei maximaler Verzögerung $a_{MAX}$ ergibt sich dabei die in FIG 2 eingezeichnete Parabel. Diese Parabel schneidet die Gerade mit der konstanten Geschwindigkeit $v_O$ in dem mit einem Kreis gekennzeichneten Punkt P1. Genau an diesem Punkt P1 müßte mit der Beschleunigung $a_{MAX}$ verzögert werden, um den Zielpunkt PO mit der Endgeschwindigkeit $v_{END}$ zu erreichen. (Der Begriff Beschleunigung" wird allgemein, also auch im Sinne von "bremsen" bzw."verzögern" gebraucht).

In das Diagramm nach FIG 2 sind die jeweiligen Abtastzeitpunkte eingezeichnet, die dem Taktzyklus der numerischen Steuerung des Rechners R entsprechen. Wie ersichtlich ist, liegt der Schnittpunkt der Parabel mit der Beschleunigung $a_{MAX}$ und der Geraden mit der konstanten Geschwindigkeit $v_O$ zwischen den Tastzeitpunkten $(k-1) \cdot T$ und $k \cdot T$. Von der numerischen Steuerung kann jedoch nur zu einem Tastzeitpunkt eine Vorgabe von Geschwindigkeits- bzw. Beschleunigungssollwerten vorgenommen werden. Würde jedoch bereits beim Tastzeitpunkt $(k-1) \cdot T$ mit der Beschleunigung $a_{MAX}$ verzögert werden, so würde die Verfahrbewegung des Schlittens bereits vor dem Punkt PO die Endgeschwindigkeit $v_{END}$ erreicht haben. Wenn die Beschleunigung $a_{MAX}$ erst zum Abtastzeitpunkt $k \cdot T$ einsetzen würde, würde der Schlitten über den Punkt PO hinaus fahren.

Nun wäre es denkbar, bereits im Abtastzeitpunkt $(k-1) \cdot T$ mit einer Beschleunigung a, die kleiner ist als die maximale Beschleunigung $a_{MAX}$, zu verzögern und diese Beschleunigung so zu wählen, daß der Punkt PO zielgenau erreicht würde. Mit dieser Maßnahme wäre es jedoch dem Zufall überlassen, ob nunmehr der Zielpunkt PO zu einem Tastzeitpunkt T erreicht würde, so daß sich für den anschließenden Positionier- bzw. Verfahrvorgang die gleichen Probleme wie bei der Einleitung der ersten Verzögerung erneut stellen.

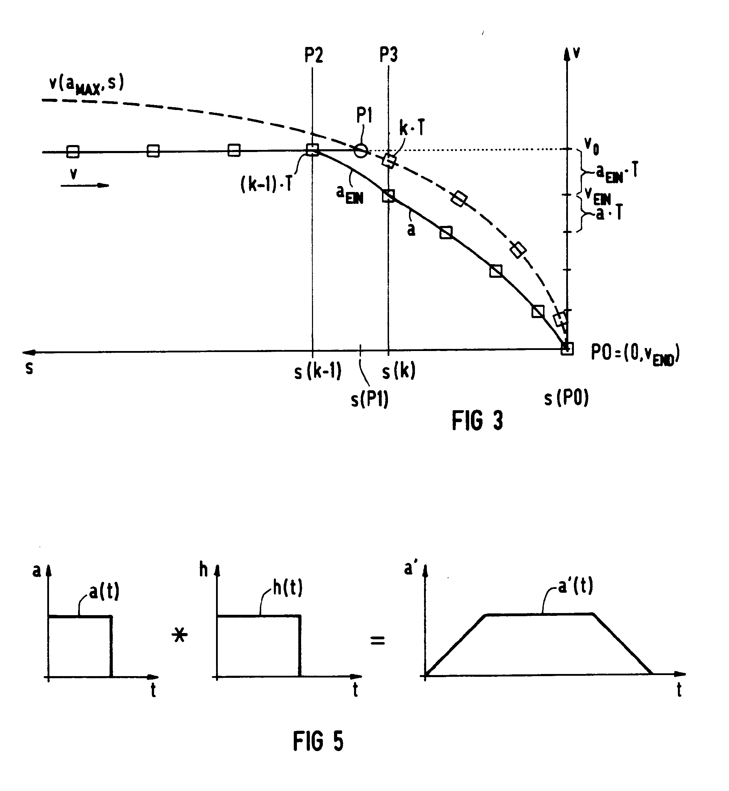

Mit dem im folgenden näher beschriebenen Verfahren ist sichergestellt, daß eine zu einem Tastzeitpunkt eingeleitete Beschleunigung bzw. Verzögerung eines Antriebssystems einen vorgegebenen Zielpunkt mit einer vorgegebenen Endgeschwindigkeit genau zu einem Tastzeitpunkt erreicht. Vom Rechner R einer numerischen Steuerung werden dazu mindestens zwei Beschleunigungswerte nach einfachen kinematischen Beziehungen mit minimalem Rechenaufwand berechnet und an die numerische Steuerung weitergegeben. Die erforderlichen Gleichungen werden im folgenden anhand der FIG 3 hergeleitet.

FIG 3 zeigt ein Geschwindigkeitswegdiagramm mit der bereits aus FIG 2 bekannten in FIG 3 jedoch gestrichelt gezeichneten Parabel mit der Beschleunigung $a_{MAX}$. Zwischen den Punkten P2 und P3 ist ein weiteres Teilstück einer Parabel mit der Beschleunigung $a_{EIN}$ und zwischen den Punkten P3 und PO eine weitere Parabel mit der Beschleunigung a eingezeichnet.

Ein Übergang auf die Bremsparabel mit der Beschleunigung a ist nur zu einem Tastzeitpunkt T erreichbar, für den gilt:

$$|a_{EIN}| \text{ kleiner } |a_{MAX}| \quad \text{G1.1}$$

Für die Eintrittsgeschwindigkeit $v_{EIN}$ am Punkt P3, also die Geschwindigkeit ab der mit der Beschleunigung a gebremst werden soll gilt:

$$v_{EIN} = v_0 + a_{EIN} \cdot T \quad \text{G1.2}$$

Die Beschleunigungen $a_{EIN}$ und a sind dabei so zu wählen, daß der Zielpunkt PO nach einer ganzzahligen Anzahl von Tastintervallen erreicht wird. Der Zeitpunkt, ab dem der Bremsvorgang mit der Beschleunigung $a_{EIN}$ eingeleitet wird, sei $t = (k-1)T$.

Für das Wegstück zwischen den Punkten P2 und P3 erhält man

$$s(k-1) - s(k) = v_0 \cdot T + \frac{a_{EIN}}{2} \cdot T^2 \quad \text{G1.3}$$

Daraus läßt sich der mit der Beschleunigung a zurückzulegende Restweg s(k) in Abhängigkeit von der Eintrittsbeschleunigung $a_{EIN}$ bestimmen. Dieser Restweg s(k) ist genau der Weg, in dem die Eintrittsgeschwindigkeit $v_{EIN}$ nach Gleichung 2 in der Zeit t, die einem ganzzahligen Vielfachen J der Abtastzeit T entspricht, auf die Endgeschwindigkeit $v_{END}$ abgebremst werden muß. Deshalb gilt

$$t = J \cdot T \text{ mit J Element von N} \quad \text{G1.4}$$

Für den mit der Beschleunigung a zurückzulegenden Restweg s(k) gilt auch die sogenannte zeitfreie Gleichung für gleichmäßig beschleunigte Bewegungen mit Anfangsgeschwindigkeit:

$$s(k) = \frac{1}{2a} (v_{EIN}^2 - v_{END}^2) \quad (G1.5)$$

Mit Gleichung 2 und Gleichung 5 ergibt sich für den Restweg s (k):

$$s(k) = \frac{1}{2a} ((v_0 + a_{EIN} \cdot T)^2 - v_{END}^2) \quad \text{G1.6}$$

oder

$$s(k) = \frac{1}{2a} ((v_0 + a_{EIN} \cdot T) + v_{END}) ((v_0 + a_{EIN} \cdot T) - v_{END}) \quad G1.7$$

Für die Eintrittsgeschwindigkeit $v_{EIN}$ gilt ferner:

$$v_{EIN} = J \cdot T \cdot a + V_{END} \quad G1.8$$

Durch Vergleich mit der Dauer des kontinuierlichen Bremsvorganges mit der Beschleunigung $a_{MAX}$ kann J nach Gleichung 9 geeignet gewählt werden,

$$J = \text{ganzzahliger Anteil} \left( \frac{v_{EIN} - v_{END}}{a_{MAX} \cdot T} \right) + C \quad G1.9$$

mit C = 0,1,2,

so daß der Bremsvorgang einschließlich dem Eintrittsintervall zwischen den Punkten P2 und P3 maximal drei Intervalle länger als ein kontinuierlicher Bremsvorgang mit maximaler Verzögerung dauern würde. (Gleichung 9 entspricht Gleichung I der Patentansprüche 2 und 4).

Für die Beschleunigung a ergibt sich

$$a = \frac{v_{EIN} - v_{END}}{J \cdot T} \quad G1.10$$

und mit Gleichung 2

$$a = \frac{v_0 + a_{EIN} \cdot T - v_{END}}{J \cdot T} \quad G1.11$$

(Gleichung 11 entspricht Gleichung V des Patentanspruches 2).

Mit Gleichung 7 und Gleichung 11 erhält man

$$s(k) = \frac{1}{2} J \cdot T (v_0 + a_{EIN} \cdot T + v_{END}) \quad G1.12$$

Setzt man Gleichung 3 und Gleichung 12 gleich, dann erhält man für die gesuchte Eintrittsbeschleunigung:

$$a_{EIN} = \frac{2 \cdot s(k-1) - (J+2) \cdot T \cdot v_0 - J \cdot T \cdot v_{END}}{(J + 1) T^2} \quad G1.13$$

Wenn also nach Gleichung 9 der Wert von J bestimmt ist, kann nach Gleichung 13 die Eintrittsbeschleunigung $a_{EIN}$ mit minimalem Rechenaufwand (Gleichung 13 weist als aufwendigste Rechenoperation lediglich einen quadratischen Term auf) berechnet werden. (Gleichung 13 entspricht Gleichung II der Patentansprüche 2 und 4).

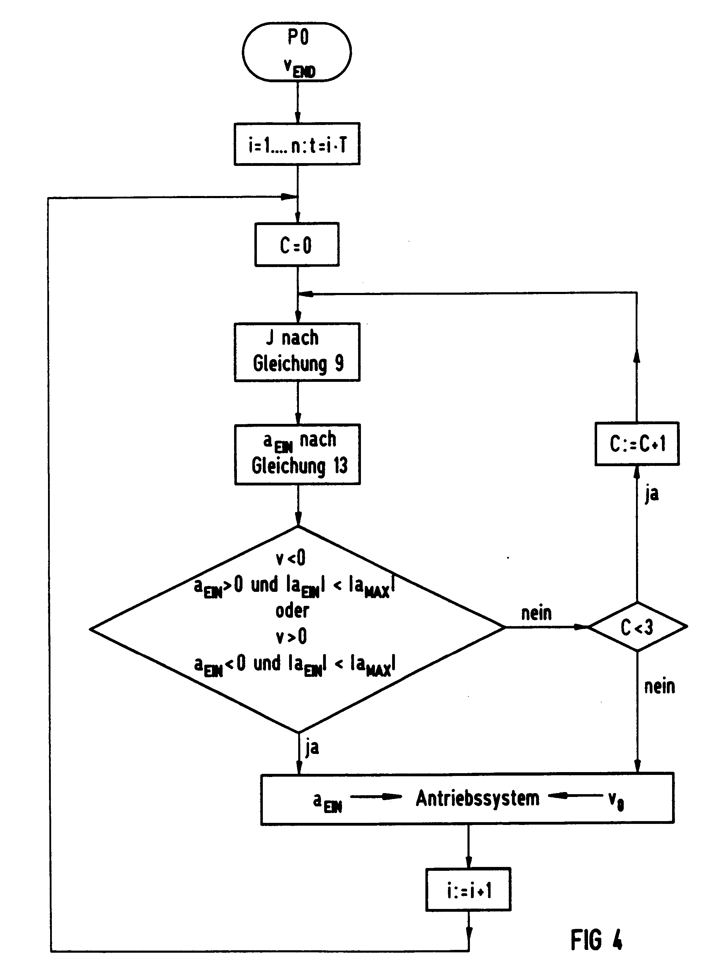

Anhand des Flußdiagramms gemäß FIG 4 seien die von der numerischen Steuerung durchzuführenden Schritte unter Bezugnahme auf die obenstehenden Gleichungen erläutert.

In einem ersten Schritt werden der numerischen Steuerung der Zielpunkt PO und die Endgeschwindigkeit $v_{END}$, mit der der Zielpunkt PO erreicht werden soll, übergeben. Bei jedem Abtastzeitpunkt $i \cdot T$, wobei die Zählvariable i von 1 bis n läuft, werden die folgenden Verfahrensschritte durchgeführt. Zunächst wird die Konstante C = O gesetzt; dann wird mit dieser Konstante J nach Gleichung 9 bestimmt. Nachdem J bestimmt ist, kann die Eintrittsbeschleunigung $a_{EIN}$ nach Gleichung 13 berechnet werden. Mit der Eintrittsbeschleunigung $a_{EIN}$ wird bei negativer Fahrt, also bei v kleiner O, geprüft, ob die Eintrittsbeschleunigung $a_{EIN}$ größer O und der Betrag der Eintrittsbeschleunigung $|a_{EIN}|$ kleiner dem Betrag der Maximalbeschleunigung $|a_{MAX}|$ ist. Bei positiver Fahrt, d.h. wenn die Geschwindigkeit v größer O ist, wird geprüft, ob die Eintrittsbeschleunigung $a_{EIN}$ kleiner O ist und der Betrag der Eintrittsbeschleunigung $|a_{EIN}|$ kleiner ist als der Betrag der Maximalbeschleunigung $|a_{MAX}|$. Ist eine dieser beiden Bedingungen erfüllt, so wird das Antriebssystem mit der Eintrittsbeschleunigung $a_{EIN}$ beaufschlagt. Ist keine der beiden Bedingungen erfüllt, so wird, solange C kleiner 3 ist, die Konstante C um den Wert "Eins" inkrementiert und die Verfahrensschritte werden wiederholt. Falls die Bedingungen für den Wert C = 2 nicht erfüllt sind, wird das Antriebssystem weiterhin mit der konstanten Geschwindigkeit $v_0$ beaufschlagt. Diese Verfahrensschritte werden dann solange wiederholt, bis der Zielpunkt PO mit der Endgeschwindigkeit $v_{END}$ erreicht wird.

Ausdrücklich soll hier nochmal erwähnt werden, daß es nicht notwendig ist, aus der Eintrittsbeschleunigung $a_{EIN}$ die Beschleunigung a zu berechnen, mit der der Zielpunkt PO schließlich mit der Endgeschwindigkeit $v_{END}$ erreicht wird. Wenn, wie beschrieben, bei jedem Abtastzeitpunkt T die Eintrittsbeschleunigung $a_{EIN}$ nach der angegebenen Gleichung 13 berechnet wird, so ist automatisch sichergestellt, daß der Zielpunkt PO zu einem Tastzeitpunkt T erreicht wird.

Damit das Antriebssystem durch die Beschleunigungsänderungen $a_{EIN}$ keine zu großen Sprünge erfährt, kann eine Ruckbegrenzung vorgesehen werden. Eine solche Ruckbegrenzung kann beispielsweise durch Filterung der Beschleunigungswerte erreicht werden, wenn das Filter so ausgestaltet ist, daß die Flanken eines jeweiligen Beschleunigungsimpulses verschliffen werden, so daß die Beschleunigung "weich" einsetzt.

Eine Ruckbegrenzung mit einem Filter auf Basis einer diskreten Faltung ist im folgenden näher erläutert.

Mit den Gleichungen 9 und 13 werden für einen beliebigen Weg von $s_1$ nach $s_2$ eine Folge von Geschwin-

digkeitssollwerten v(k) erzeugt. Die Position $s_1$ läßt sich nach Gleichung 14 als Linearkombination der einzelnen Geschwindigkeitssollwerte ausdrücken:

$$s_1 = s_0 + \sum_{k=0}^{m} v_{(k-1)} \; T + \frac{v_{(k)} \cdot v_{(k-1)}}{2} \cdot T \qquad G1.14$$

$$= s_0 + \sum_{k=0}^{m} \frac{v_{(k)} + v_{(k+1)}}{2} \cdot T$$

Die Lage $s_1$ wird aufgrund der Linearität ebenfalls erreicht, wenn statt der Folge v(k) die Folge $v_r(k)$ vorgegeben wird. Die Folge $v_r(k)$ erhält man aus v(k) durch Mittelwertbildung mit gleitendem Fenster der Breite $T_M = M \cdot T$, wenn das Filter den stationären Übertragungsfaktor 1 hat bzw. die Impulsantwort

$$g(k) = \quad 1/M \quad \text{für} \quad k \text{ kleiner } M \qquad G1.15$$
$$0 \qquad \text{sonst}$$

Damit ergibt sich ein maximaler Ruck, also die Ableitung der Beschleunigung
$$r_{MAX} \text{ kleiner } = 1/T_M \cdot a_{MAX} \quad G1.16$$
Auch für mittlere und kleine Wege wird weiterhin überschwingfreies exaktes Positionieren gewährleistet. Der Ruck kann dann bis zum Wert
$$r_{MAX} \text{ kleiner } = 2/T_M \cdot a_{MAX} \quad G1.17$$
ansteigen. Erforderlichenfalls muß also bei kleinen Wegen mit der doppelten Fensterbreite gemittelt werden.

Die beschriebene Ruckbegrenzung durch das Rechteckfilter entspricht einer diskreten Faltung, deren prinzipieller Verlauf anhand der FIG 5 der Einfachheit halber für den kontinuierlichen Fall beschrieben wird. Die Beschleunigung a(t) innerhalb eines Tastintervalls wird dabei gefaltet mit dem Filter mit der Übertragungsfunktion h(t). Das Ergebnis der Faltung a'(t) zeigt, daß die resultierende Beschleunigung nicht mehr sprungartig, sondern kontinuierlich ansteigt. Die Faltungsbeziehung für den kontinuierlichen Fall lautet:

$$a'(t) = a(t) * h(t) = \int_0^\infty a(t) \quad h(\tau - t) \, dt.$$

**Patentansprüche**

1. Verfahren zur numerischen Positions- oder Bahnsteuerung von motorischen Antriebssystemen, wobei durch sukzessives Anfahren von vorgebbaren Positionen, die auf einer mindestens eindimensionalen Bewegungsbahn liegen können, ein Zielpunkt PO mit einer vorgebbaren Endgeschwindigkeit $v_{END}$ erreichbar ist, wobei hierzu durch eine numerische Steuervorrichtung eine Vorgabe von Steuersignalen erfolgt, **dadurch gekennzeichnet**, daß eine Vorgabe von Steuersignalen zum Erreichen des Zielpunktes PO zu diskreten Abtastzeitpunkten $i \cdot T, i=0,1...n$ nach folgenden Verfahrensschritten vorgenommen wird:
   a) Bei einem ersten Abtastzeitpunkt $(k-1) \cdot T$, der vor dem Zeitpunkt $t_{MIN}$ liegt, ab dem mit der maximalen Beschleunigung $a_{MAX}$ der Zielpunkt PO mit der Endgeschwindigkeit $v_{END}$ erreichbar wäre, wird eine Eintrittsbeschleunigung $a_{EIN}$ bestimmt,
   b) das Antriebssystem wird von der numerischen Steuerung bis zum nächstfolgenden zweiten Abtastzeitpunkt $k \cdot T$ mit der Eintrittsbeschleunigung $a_{EIN}$ beaufschlagt,
   c) bei dem zweiten Abtastzeitpunkt $k \cdot T$ wird eine Beschleunigung a bestimmt, mit der das Antriebssystem bis zum Erreichen des Zielpunkts PO beaufschlagt wird,
   d) die Eintrittsbeschleunigung $a_{EIN}$ und die Beschleunigung a werden so gewählt, daß der Zielpunkt PO genau zu einem Abtastzeitpunkt $n \cdot T$ mit der Endgeschwindigkeit $v_{END}$ erreicht wird.

**2.** Verfahren nach Anspruch 1, **gekennzeichnet** dadurch, daß

i) die Eintrittsbeschleunigung $a_{EIN}$ in Verfahrensschritt a) von Anspruch 1 folgenderweise bestimmt wird:

a1) Zu einem ersten Abtastzeitpunkt (k-1)T,k·T wird ein ganzzahliger Wert J nach Gleichung I berechnet

$$J = \text{ganzzahliger Anteil} \left( \frac{v_0 - v_{END}}{a_{MAX}} \cdot 1/T \right) + C \quad (I)$$

mit

C = 0,1,2

wobei $v_O$ die Anfangsgeschwindigkeit des Antriebssystems zum jeweiligen Abtastzeitpunkt (k-l)·T, $v_{END}$ die vorgegebene Endgeschwindigkeit am Zielpunkt PO, $a_{MAX}$ die Maximalbeschleunigung des Antriebssystems und T die Abtastzeit ist,

a2) zum gleichen ersten Abtastzeitpunkt (k-1)·T,k·T wird eine Eintrittsbeschleunigung $a_{EIN}$ nach Gleichung II berechnet

$$a_{EIN} = \frac{2 \cdot s(k-1) - (J+2) \cdot T \cdot v_0 - J \cdot T \cdot v_{END}}{(J+1) \cdot T^2} \quad (II)$$

wobei s(k-1) der verbleibende Weg bis zum Zielpunkt PO ist,

a3) nach jeder Berechnung der Eintrittsbeschleunigung $a_{EIN}$ werden die in Gleichung III und Gleichung IV angegebenen Bedingungen geprüft:

für v kleiner 0: $a_{EIN}$ größer 0 und $|a_{EIN}|$ kleiner $|a_{MAX}|$ (III)
für v größer 0: $a_{EIN}$ kleiner 0 und $|a_{EIN}|$ kleiner $|a_{MAX}|$ (IV)

a4) ist keine der bei Schritt a3) genannten Bedingungen erfüllt, so werden die Schritte a) bis c) wiederholt, wobei der Wert von C inkrementiert wird,

a5) ist keine der bei Schritt a3) genannten Bedingungen bei c = 2 erfüllt, wird bis zum nächsten Abtastzeitpunkt die bisherige Geschwindigkeit des Antriebssystems beibehalten,

a6) ist eine der in Schritt a3) genannten Bedingungen erfüllt, ist Verfahrensschritt i) beendet,

ii) die Beschleunigung a in Verfahrensschritt c) von Anspruch 1 nach folgender Gleichung V bestimmt wird.

$$a = \frac{v_0 + a_{EIN} \cdot T - v_{END}}{J \cdot T} \quad (V)$$

**3.** Verfahren zur numerischen Positions- oder Bahnsteuerung von motorischen Antriebssystemen, wobei durch sukzessives Anfahren von vorgebbaren Positionen, die auf einer mindestens eindimensionalen Bewegungsbahn liegen können, ein Zielpunkt PO mit einer vorgebbaren Endgeschwindigkeit $v_{END}$ erreichbar ist, wobei durch eine numerische Steuervorrichtung eine Vorgabe von Steuersignalen erfolgt, **dadurch gekennzeichnet**, daß eine Vorgabe von Steuersignalen zum Erreichen des Zielpunkts PO zu diskreten Abtastzeitpunkten i·T, i=0,1...n nach folgenden Verfahrensschritten vorgenommen wird:

a) Bei einem ersten Abtastzeitpunkt (k-1)·T, der vor dem Zeitpunkt $t_{MIN}$ liegt, ab dem mit der maximalen Beschleunigung $a_{MAX}$ der Zielpunkt PO mit der Endgeschwindigkeit $v_{END}$ erreichbar wäre, wird eine Eintrittsbeschleunigung $a_{EIN}$ bestimmt,

b) bei jedem weiteren Abtastzeitpunkt k·T wird jeweils eine Eintrittsbeschleunigung $a_{EIN}$ k·T bestimmt,

c) das Antriebssystem wird von der numerischen Steuerung zum jeweiligen Abtastzeitpunkt (k-1)·T,k·T mit der jeweiligen Eintrittsbeschleunigung $a_{EIN}$(k-1)·T,$a_{EIN}$ k·T beaufschlagt,

d) jede Eintrittsbeschleunigung $a_{EIN}$(k-1),$a_{EIN}$(k) wird so gewählt, daß zu einem jeweiligen weiteren Abtastzeitpunkt k·T der verbleibende Restweg s(k) mit einer Beschleunigung a, während einer Zeitspanne n·T, die einem ganzzahligen Vielfachen der Abtastzeit entspricht, zurücklegbar wäre.

**4.** Verfahren nach Anspruch 3, **gekennzeichnet** dadurch, daß die Eintrittsbeschleunigung $a_{EIN}$ un den Verfahrensschritten a) und b) von Anspruch 3 folgenderweise bestimmt wird.

a1) Zu jedem Abtastzeitpunkt (k-l)T,k·T wird ein ganzzahliger Wert J nach Gleichung I berechnet

$$J = \text{ganzzahliger Anteil} \left( \frac{v_0 - v_{END}}{a_{MAX}} \cdot 1/T \right) + C \quad (I)$$

mit

C = 0,1,2

wobei $v_O$ die Anfangsgeschwindigkeit des Antriebssystems zum jeweiligen Abtastzeitpunkt (k-1)·T, $v_{END}$ die vorgegebene Endgeschwindigkeit am Zielpunkt PO, $a_{MAX}$ die Maximalbeschleunigung des Antriebssystems und T die Abtastzeit ist,

a2) zum jeweiligen Abtastzeitpunkt (k-1)·T,k·T wird eine Eintrittsbeschleunigung $a_{EIN}$ nach Gleichung

II berechnet

$$a_{EIN} = \frac{2 \cdot s(k-1) - (J+2) \cdot T \cdot v_0 - J \cdot T \cdot v_{END}}{(J+1) \cdot T^2} \quad (II)$$

wobei s(k-1) der verbleibende Weg bis zum Zielpunkt PO ist,

a3) nach jeder Berechnung der Eintrittsbeschleunigung $a_{EIN}$ werden die in Gleichung III und Gleichung IV angegebenen Bedingungen geprüft:

für v kleiner 0: $a_{EIN}$ größer 0 und $|a_{EIN}|$ kleiner $|a_{MAX}|$    (III)

für v größer 0: $a_{EIN}$ kleiner 0 und $|a_{EIN}|$ kleiner $|a_{MAX}|$    (IV)

a4) ist keine der bei Schritt a3) genannten Bedingungen erfüllt, so werden die Schritte al) bis a3) wiederholt, wobei der Wert von C inkrementiert wird,

a5) ist keine der bei Schritt a3) genannten Bedingungen bei C = 2 erfüllt, wird bis zum nächsten Abtastzeitpunkt die bisherige Geschwindigkeit des Antriebssystems beibehalten,

a6) ist eine der in Schritt a3) genannten Bedingungen erfüllt, so wird das Verfahren nach Anspruch 3 bei Verfahrensschritt c) fortgesetzt.

5. Verfahren nach einem der vorstehenden Ansprüche, **dadurch gekennzeichnet**, daß Mittel vorgesehen sind, durch die die Flanken der Beschleunigungsimpulse verschliffen werden.

6. Verfahren nach einem der vorstehenden Ansprüche, **dadurch gekennzeichnet**, daß ein Impulsfilter mit stationärem Übertragungsfaktor Eins und einer Impulsbreite eines Vielfachen der Abtastzeit T vorgesehen ist, wobei das Antriebssystem mit den jeweils gefilterten Beschleunigungswerten $a_{EIN}$, a beaufschlagt wird.


## Claims

1. A process for the numerical position- or path control of motor-operated drive systems wherein, by the successive approaching of predeterminable positions which can be located on an at least one-dimensional path of motion, a target point PO can be reached with a predeterminable final velocity $v_{END}$, wherein for this purpose control signals are preset by a numerical control device, characterised in that a presetting of control signals for the attainment of the target point PO at discrete sensing times i-T, i = 0,1...n is carried out in accordance with the following process steps:

a) At a first sensing time (k-1)·T, which occurs before the time $t_{MIN}$, from which with the maximum acceleration $a_{MAX}$ the target point PO would be attainable with the final velocity $v_{END}$, an approach acceleration $a_{EIN}$ is defined,

b) the drive system is supplied by the numerical control device with the approach acceleration $a_{EIN}$ until the following, second sensing time k·T,

c) at the second sensing time k·T an acceleration a is defined with which the drive system is supplied until the target point PO is reached,

d) the approach acceleration $a_{EIN}$ and the acceleration a are selected such that the target point PO is reached precisely at a sensing time n·T with the final velocity $v_{END}$.

2. A process as claimed in Claim 1, characterised in that

i) the approach acceleration $a_{EIN}$ in process step a) of Claim 1 is determined as follows:

a1) At a first sensing time (k-1)T, k·T an integral value J is calculated in accordance with equation I

$$J = \text{integral component} \left( \frac{v_0 - v_{END}}{a_{MAX}} \cdot 1/T \right) + C \quad (I)$$

where

C = 0,1,2

where $v_0$ is the starting velocity of the drive system at the respective sensing time (k-1)·T, $v_{END}$ is the predetermined final velocity at the target point PO, $a_{MAX}$ is the maximum acceleration of the drive system and T is the sensing time,

a2) at the same first sensing time (k-1)·T, k·T an approach acceleration $a_{EIN}$ is calculated in accordance with equation II

$$a_{EIN} = \frac{2 \cdot s(k-1) - (J+2) \cdot T \cdot v_0 - J \cdot T \cdot v_{END}}{(J+1) \cdot T^2} \quad (II)$$

where s(k-1) is the remaining distance to the target point PO

a3) after each calculation of the approach acceleration $a_{EIN}$ the conditions stated in equation III and equation IV are checked:

when v is smaller than 0: $a_{EIN}$ greater than 0 and $|a_{EIN}|$ smaller than $|a_{MAX}|$   (III)

when v is greater than 0: $a_{EIN}$ smaller than 0 and $|a_{EIN}|$ smaller than $|a_{MAX}|$   (IV)

a4) if none of the conditions given in step a3) is fulfilled, steps a) to c) are repeated, the value of C being incremented,

a5) if none of the conditions given in step a3) is fulfilled for c=2, the existing velocity of the drive system is maintained until the next calibration time,

a6) if one of the conditions given in step a3) is fulfilled, process step i) is ended,

ii) the acceleration a in process step c) of Claim 1 is determined in accordance with the following equation V

$$a = \frac{v_0 + a_{EIN} \cdot T - v_{END}}{J \cdot T} \quad (V)$$

3. A process for the numerical position- or path control of motor-operated drive systems, wherein, by the successive approaching of predeterminable positions which can be located on an at least one-dimensional path of motion, a target point PO can be reached at a predeterminable final velocity $v_{END}$, wherein control signals are preset by a numerical control device, characterised in that a presetting of control signals for the attainment of the target point PO at discrete sensing times $i \cdot T$, $i = 0,1...n$ is carried out in accordance with the following process steps:

a) At a first sensing time $(k-1) \cdot T$, which occurs before the time $t_{MIN}$, from which with the maximum acceleration $a_{MAX}$ the target point PO would be attainable with the final velocity $v_{END}$, an approach acceleration $a_{EIN}$ is defined,

b) at each further sensing time $k \cdot T$ a respective approach acceleration $a_{EIN} \, k \cdot T$ is defined,

c) the drive system is supplied by the numerical control device at the respective sensing time $(k-1) \cdot T$, $k \cdot T$ with the respective approach acceleration $a_{EIN}(k-1) \cdot T$, $a_{EIN} \, k \cdot T$,

d) each approach acceleration $a_{EIN}(k-1), a_{EIN}(k)$ is selected such that at a respective further sensing time $k \cdot T$ the remaining residual distance $s(k)$ would be able to be travelled with an acceleration a during a time interval $n \cdot T$ corresponding to an integral multiple of the sensing time.

4. A process as claimed in Claim 3, characterised in that the approach acceleration $a_{EIN}$ in process steps a) and b) of Claim 3 is determined as follows:

a1) At each sensing time $(k-1)T, k \cdot T$ an integral value J is calculated in accordance with equation I

$$J = \text{integral component } (\frac{v_0 - v_{END}}{a_{MAX}} \cdot 1/T) + C \quad (I)$$

where

C = 0,1,2

where $v_0$ is the starting velocity of the drive system at the respective sensing time $(k-1) \cdot T$, $v_{END}$ is the predetermined final velocity at the target point PO, $a_{MAX}$ is the maximum acceleration of the drive system and T is the sensing time,

a2) at the respective sensing time $(k-1) \cdot T$, $k \cdot T$ an approach acceleration $a_{EIN}$ is calculated in accordance with equation II

$$a_{EIN} = \frac{2 \cdot s(k-1) - (J+2) \cdot T \cdot v_0 - J \cdot T \cdot v_{END}}{(J+1) \cdot T^2} \quad (II)$$

where $s(k-1)$ is the remaining distance to the target point PO,

a3) after each calculation of the approach acceleration $a_{EIN}$ the conditions given in equation III and equation IV are checked:

when v is smaller than 0: $a_{EIN}$ greater than 0 and $|a_{EIN}|$ smaller than $|a_{MAX}|$   (III)

when v is greater than 0: $a_{EIN}$ smaller than 0 and $|a_{EIN}|$ smaller than $|a_{MAX}|$   (IV)

a4) if none of the conditions given in step a3) is fulfilled, steps al) to a3) are repeated, the value of C being incremented,

a5) if none of the conditions given in step a3) is fulfilled for C=2, the existing velocity of the drive system is maintained until the next sensing time,

a6) if one of the conditions given in step a3) is fulfilled, the process according to Claim 3 is continued from process step c).

5. A process as claimed in one of the preceding claims characterised in that means are provided by which the edges of the acceleration pulses are rounded.

6. A process as claimed in one of the preceding claims, characterised in that a pulse filter with a steady state gain of one and with a pulse breadth of a multiple of the sensing time T is provided, where the drive system is supplied with the respective filtered acceleration values $a_{EIN}$, a.

## Revendications

1. Procédé de commande numérique de position ou de trajectoire de systèmes d'entraînement motorisés, un point de destination PO pouvant être atteint avec une vitesse finale prescriptible $v_{END}$ par approches successives de positions prescriptibles qui peuvent être situées sur une trajectoire de déplacement au moins unidimensionnelle, une prescription de signaux de commande s'effectuant à cet effet au moyen d'un dispositif de commande numérique, caractérisé par le fait que l'on effectue une prescription de signaux de commande pour atteindre le point de destination PO à des instants d'échantillonnage discrets i.T, i = 0, 1... n, suivant les étapes opératoires suivantes :

   a) on détermine une accélération d'entrée $a_{EIN}$ à un premier instant d'échantillonnage $(k-i) \cdot T$, qui est situé avant l'instant $t_{MIN}$, à partir duquel le point de destination PO pourrait être atteint, avec la vitesse finale $v_{END}$, sur la base de l'accélération maximale $a_{MAX}$,

   b) le système d'entraînement est soumis à l'accélération d'entrée $a_{EIN}$, par la commande numérique, jusqu'au second instant immédiatement suivant d'échantillonnage k.T,

   c) au second instant d'échantillonnage k.T, on détermine une accélération a, à laquelle on soumet le système d'entraînement jusqu'à ce que le point de destination PO soit atteint,

   d) on choisit l'accélération d'entrée $a_{EIN}$ et l'accélération a de sorte à atteindre le point PO de destination avec la vitesse finale $v_{END}$ précisément à un instant d'échantillonnage n.T.

2. Procédé suivant la revendication 1, caractérisé par le fait que

   i) on détermine l'accélération d'entrée $a_{EIN}$ lors de l'étape opératoire a) de la revendication 1, de la manière suivante :

   a1) à un premier instant d'échantillonnage $(k-1)T, k.T$ on calcule une valeur J sous forme d'un nombre entier suivant la relation I

$$J = \text{partie entière de } \left( \frac{v_0 - v_{END}}{a_{MAX}} \cdot 1/T \right) + C \quad (I)$$

   avec

   $C = 0, 1, 2$

   $v_O$ représentant la vitesse initiale du système d'entraînement à l'instant d'échantillonnage respectif $(k-i) \cdot T$, $v_{END}$ la vitesse finale prescrite au point de destination PO, aMAX l'accélération maximale du système d'entraînement et T la durée d'échantillonnage,

   a2) on calcule une accélération d'entrée $a_{EIN}$ au même premier instant d'échantillonnage $(k-i) \cdot T, k \cdot T$ suivant la relation II

$$a_{EIN} = \frac{2.s(k-1) - (J+2).T.v_0 - J.T.v_{END}}{(J+1).T^2} \quad (II)$$

   $s(k-1)$ représentant le trajet restant jusqu'au point de destination PO,

   a3) après chaque calcul de l'accélération d'entrée $a_{EIN}$, on contrôle les conditions indiquées dans la relation III et dans la relation IV :

   pour v inférieure à 0 : $a_{EIN}$ supérieure à 0 et $|a_{EIN}|$ inférieure à $|a_{MAX}|$ (III)

   pour v supérieure à 0 : $a_{EIN}$ inférieure à 0 et $|a_{EIN}|$ inférieure à $|a_{MAX}|$ (IV),

   a4) si aucune des conditions indiquées lors de l'étape a3) n'est satisfaite, on répète les étapes a) à c), la valeur de C étant incrémentée,

   a5) si aucune des conditions indiquées lors de l'étape a3) n'est satisfaite pour c=2, on conserve la vitesse présente jusqu'alors du système d'entraînement jusqu'à l'instant d'échantillonnage suivant,

   a6) si l'une des conditions indiquées lors de l'étape a3) est satisfaite, l'étape opératoire i) est terminée,

   ii) on détermine l'accélération a lors de l'étape opératoire c) de la revendication 1 selon la relation V suivante :

$$a = \frac{v_0 + a_{EIN} \cdot T - v_{END}}{J.T} \quad (V)$$

3. Procédé de commande numérique de position ou de trajectoire de systèmes d'entraînement motorisés, un point de destination PO pouvant être atteint avec une vitesse finale prescriptible $v_{END}$ par approches successives de positions prescriptibles qui peuvent être situées sur une trajectoire de déplacement au moins unidimensionnelle, une prescription de signaux de commande s'effectuant à cet effet au moyen d'un dispositif de commande numérique, caractérisé par le fait que l'on effectue une prescription de signaux de commande pour atteindre le point de destination PO à des instants d'échantillonnage discrets $i.T$, $i = 0, 1... n$, suivant les étapes opératoires suivantes :

a) on détermine une accélération d'entrée $a_{EIN}$ à un premier instant d'échantillonnage $(k-i).T$, qui est situé avant l'instant $t_{MIN}$, à partir duquel le point de destination PO pourrait être atteint, avec la vitesse finale $v_{END}$, sur la base de l'accélération maximale $a_{MAX}$,

b) à chaque autre instant d'échantillonnage $k.T$, on détermine une accélération d'entrée $a_{EIN}$ $k.T$,

c) le système d'entraînement est soumis par la commande numérique respectivement à l'instant d'échantillonnage $(k-1)\cdot T$, $k.T$ à l'accélération d'entrée $a_{EIN}$ $(k-i).T$, $aEIN$ $k.T$,

d) on choisit chaque accélération d'entrée $a_{EIN}(k-1)$, $a_{EIN}(k)$ de manière qu'à un autre instant d'échantillonnage respectif $k.T$, le trajet restant $s(k)$ pourrait être parcouru avec une accélération $a$, pendant un intervalle de temps $n.T$, qui correspond à un multiple entier de la durée d'échantillonnage.

4. Procédé suivant la revendication 3, caractérisé par le fait que l'on détermine l'accélération d'entrée $a_{EIN}$ dans les étapes opératoires a) et b) de la revendication 3 de la manière suivante :

a1) on calcule à chaque instant d'échantillonnage $(k-1)T,k.T$ une valeur J sous forme d'un nombre entier suivant la relation I

$$J = \text{partie entière de } \left(\frac{v_0 - v_{END}}{a_{MAX}} \cdot 1/T\right) + C \quad \text{(I)}$$

avec

$C = 0,1,2$

$v_0$ représentant la vitesse initiale du système d'entraînement à l'instant d'échantillonnage respectif $(k-1).T$, $v_{END}$ la vitesse finale prescrite au point de destination PO, $a_{MAX}$ l'accélération maximale du système d'entraînement et T la durée d'échantillonnage,

a2) on calcule une accélération d'entrée $a_{EIN}$ à l'instant d'échantillonnage $(k-i).T,k.T$ suivant la relation II

$$a_{EIN} = \frac{2.s(k-1) - (J+2).T.v_0 - J.T.v_{END}}{(J+1).T^2} \quad \text{(II)}$$

$s(k-1)$ représentant le trajet restant jusqu'au point de destination PO,

a3) après chaque calcul de l'accélération d'entrée $a_{EIN}$, on vérifie les conditions indiquées dans la relation III et dans la relation IV :

pour v inférieure à 0 : $a_{EIN}$ supérieure à 0 et $|a_{EIN}|$ inférieure à $|a_{MAX}|$ (III)

pour v supérieure à 0 : $a_{EIN}$ inférieure à 0 et $|a_{EIN}|$ inférieure à $|a_{MAX}|$ (IV),

a4) si aucune des conditions indiquées lors de l'étape a3) n'est satisfaite, on répète les étapes a) à c), la valeur de C étant incrémentée,

a5) si aucune des conditions indiquées lors de l'étape a3) n'est satisfaite pour c=2, on conserve la vitesse présente jusqu'alors du système d'entraînement jusqu'à l'instant d'échantillonnage suivant,

a6) si l'une des conditions indiquées lors de l'étape a3) est satisfaite, le procédé se poursuit avec l'étape opératoire c) suivant la revendication 3.

5. Procédé suivant l'une des revendictions précédentes, caractérisé par le fait qu'il est prévu des moyens, par lesquels on diminue la pente des flancs des impulsions d'accélération.

6. Procédé suivant l'une des revendictions précédentes, caractérisé par le fait qu'il est prévu un filtre d'impulsions possédant un facteur de transfert fixe égal à un et une durée d'impulsion égale à un multiple de la durée d'échantillonnage T, le système d'entraînement étant soumis aux valeurs d'accélération $a_{EIN}$ respectivement filtrées.

FIG 1

FIG 2

FIG 3

FIG 5

FIG 4